# EUROPEAN PATENT APPLICATION

(11) **EP 3 908 076 A1**
(43) Date of publication of application: **10.11.2021**
(21) Application number: 21178714.8
(22) Date of filing: 20.12.2016
(51) Int. Cl.: H04W 92/10

(54) **METHOD AND DEVICE FOR CONFIGURING COMMUNICATION PARAMETER**

(62) Divisional of application: 16924726.9
(71) Applicant: GUANGDONG OPPO MOBILE TELECOMMUNICATIONS CORP., LTD., Dongguan, Guangdong 523860 (CN)
(72) Inventor: TANG, Hai, Dongguan, 523860 (CN)
(74) Representative: Manitz Finsterwald Patent- und Rechtsanwaltspartnerschaft mbB

(57) **Abstract**

The present application provides a method and a device for configuring a communication parameter, where the method includes: a network device determines a configuration mode corresponding to each of N communication parameters, respectively, where N is a positive integer greater than or equal to 1; and the network device transmits configuration mode indication information to a terminal device, where the configuration mode indication information is used to indicate the configuration mode corresponding to each communication parameter. According to the method and the device for configuring the communication parameter provided in the present application, a configuration mode corresponding to the communication parameter can be determined dynamically, so that the communication parameter is flexibly configured in order to meet requirements from a future wireless network.

## Description

### TECHNICAL FIELD

Embodiments of the present application relate to the field of communications and, more particularly, to a method and a device for configuring a communication parameter.

### BACKGROUND

There are mainly three parameter configuration modes in an existing wireless network: a static configuration mode, a semi-static configuration mode, and a dynamic configuration mode. The configuration mode corresponding to a specific parameter can only be one of the above three modes.

However, in a future wireless network, a number of scenarios and parameters will be introduced. If only one configuration mode is used to configure a parameter, requirements of a communication system cannot be met.

Therefore, it is desirable to provide a method for configuring a communication parameter, according to which the communication parameter can be flexibly configured in order to meet the requirements from the future wireless network.

### SUMMARY

The present application provides a method and a device for configuring a communication parameter, according to which the communication parameter can be flexibly configured in order to meet the requirements from the future wireless network.

In a first aspect, a method for configuring a communication parameter is provided, including: determining, by a network device, a configuration mode corresponding to each of N communication parameters, respectively, where N is a positive integer greater than or equal to 1; and transmitting, by the network device, configuration mode indication information to a terminal device, where the configuration mode indication information is used to indicate the configuration mode corresponding to each communication parameter.

According to the method for configuring the communication parameter in the present application, after determining a configuration mode corresponding to the communication parameter, the network device indicates the configuration mode of the communication parameter to the terminal device. Thus, the network device can dynamically determine the configuration mode corresponding to the communication parameter, so that the communication parameter is flexibly configured in order to meet requirements from a future wireless network.

With reference to the first aspect, in an implementation of the first aspect, the determining, by the network device, the configuration mode corresponding to each of N communication parameters includes: determining, by the network device, the configuration mode corresponding to each communication parameter according to each communication parameter and an optional configuration mode, where the optional configuration mode includes at least one of the following configuration modes: a configuration mode configured via system information, a configuration mode configured via radio resource control (RRC) signaling, a configuration mode configured via physical layer signaling, a configuration mode configured via medium access control (MAC) layer signaling, and a configuration mode configured via both the RRC signaling and the physical layer signaling.

With reference to the first aspect and the implementation described above, in another implementation of the first aspect, the N communication parameters include an uplink waveform mode.

With reference to the first aspect and an implementation described above, in another implementation of the first aspect, the determining, by the network device, the configuration mode corresponding to each communication parameter according to each communication parameter and an optional configuration mode includes: determining, by the network device, a configuration mode of the optional configuration mode corresponding to the uplink waveform mode according to environments of a channel in which the terminal device is located and/or a moving speed of the terminal device.

With reference to the first aspect and an implementation described above, in another implementation of the first aspect, the transmitting, by the network device, the configuration mode indication information to the terminal device includes: transmitting, by the network device, RRC signaling to the terminal device, where the RRC signaling includes the configuration mode indication information.

With reference to the first aspect and an implementation described above, in another implementation of the first aspect, where the N communication parameters include a subcarrier spacing; and
where the determining, by the network device, the configuration mode corresponding to each communication parameter according to each communication parameter and an optional configuration mode includes: determining, by the network device, a configuration mode of the optional configuration mode corresponding to the subcarrier spacing according to the number of subcarrier spacings used in a cell in which the terminal device is located.

With reference to the first aspect and an implementation described above, in another implementation of the first aspect, the determining, by the network device, a configuration mode of the optional configuration mode corresponding to the subcarrier spacing according to the number of subcarrier spacings used in a cell in which the terminal device is located includes: when it is determined that the cell uses one subcarrier spacing, determining, by the network device, the configuration mode configured via the system information as the configuration mode corresponding to the subcarrier spacing; or when it is determined that the cell uses more subcarrier spacings, determining, by the network device, one of the following configuration modes included in the optional configuration mode: the configuration mode configured via the RRC signaling, the configuration mode configured via the physical layer signaling and the configuration mode configured via the MAC layer signaling, as the configuration mode corresponding to the subcarrier spacing.

With reference to the first aspect and an implementation described above, in another implementation of the first aspect, the transmitting, by the network device, the configuration mode indication information to the terminal device includes: transmitting, by the network device, system information to the terminal device, where the system information includes the configuration mode indication information.

With reference to the first aspect and an implementation described above, in another implementation of the first aspect, the N communication parameters include a duplex mode; and
where the determining, by the network device, the configuration mode corresponding to each communication parameter according to each communication parameter and an optional configuration mode includes: determining, by the network device, a configuration mode of the optional configuration mode corresponding to the duplex mode according to the number of duplex modes used in the cell in which the terminal device is located.

With reference to the first aspect and an implementation described above, in another implementation of the first aspect, the determining, by the network device, the configuration mode of the optional configuration mode corresponding to the duplex mode according to the number of duplex modes used in the cell in which the terminal device is located includes: when it is determined that the cell uses one duplex mode, determining, by the network device, the configuration mode configured via the system information as the configuration mode corresponding to the duplex mode; or when it is determined that the cell uses more duplex modes, determining, by the network device, one of the following configuration modes included in the optional configuration mode: the configuration mode configured via the RRC signaling, the configuration mode configured via the physical layer signaling, the configuration mode configured via the MAC layer signaling and the configuration mode configured via both the RRC signaling and the physical layer signaling, as the configuration mode corresponding to the duplex mode.

With reference to the first aspect and an implementation described above, in another implementation of the first aspect, the duplex modes used in the cell include at least one of the following duplex modes: a frequency division duplex (FDD), a time division duplex (TDD), and a full duplex.

With reference to the first aspect and an implementation described above, in another implementation of the first aspect, the transmitting, by the network device, the configuration mode indication information to the terminal device includes: transmitting, by the network device, RRC signaling to the terminal device, where the RRC signaling includes the configuration mode indication information; or transmitting, by the network device, system information to the terminal device, where the system information includes the configuration mode indication information.

In a second aspect, a method for configuring a communication parameter is provided, including: receiving, by a terminal device, configuration mode indication information transmitted by a network device, where the configuration mode indication information is used to indicate a configuration mode corresponding to each of N communication parameters, respectively, and where N is a positive integer greater than or equal to 1; determining, by the terminal device, the configuration mode corresponding to each communication parameter according to the confirmation mode indication information; and acquiring, by the terminal device, each communication parameter according to the configuration mode corresponding to each communication parameter.

According to the method for configuring the communication parameter in the present application, the terminal device receives indication information transmitted by the network device indicative of the configuration mode of the communication parameter, and acquires the communication parameter according to the received indication information. Thus, the network device is allowed to dynamically determine the configuration mode corresponding to the communication parameter, so that the communication parameter is flexibly configured in order to meet requirements from a future wireless network.

With reference to the second aspect, in an implementation of the second aspect, the configuration mode corresponding to each communication parameter is determined by the network device according to each communication parameter and an optional configuration mode, where the optional configuration mode includes at least one of the following configuration modes: a configuration mode configured via system information, a configuration mode configured via RRC signaling, a configuration mode configured via physical layer signaling, a configuration mode configured via MAC layer signaling, and a configuration mode configured via both the RRC signaling and the physical layer signaling.

With reference to the second aspect and the implementation described above, in another implementation of the second aspect, characterized in the N communication parameters include an uplink waveform mode.

With reference to the second aspect and an implementation described above, in another implementation of the second aspect, a configuration mode of the optional configuration mode corresponding to the uplink waveform mode is determined by the network device according to environments of a channel in which the terminal device is located and/or a moving speed of the terminal device.

With reference to the second aspect and an implementation described above, in another implementation of the second aspect, the receiving, by the terminal device, the configuration mode indication information transmitted by the network device includes: receiving, by the terminal device, RRC signaling transmitted by the network device, where the RRC signaling includes the configuration mode indication information.

With reference to the second aspect and an implementation described above, in another implementation of the second aspect, the N communication parameters include a subcarrier spacing, and a configuration mode of the optional configuration mode corresponding to the subcarrier spacing is determined by the network device according to the number of subcarrier spacings used in a cell in which the terminal device is located.

With reference to the second aspect and an implementation described above, in another implementation of the second aspect, when the cell uses one subcarrier spacing, the configuration mode corresponding to the subcarrier spacing is the configuration mode configured via the system information; or when the cell uses more subcarrier spacings, the configuration mode corresponding to the subcarrier spacing is one of the following configuration modes included in the optional configuration: the configuration mode configured via the RRC signaling, the configuration mode configured via the physical layer signaling and the configuration mode configured via the MAC layer signaling.

With reference to the second aspect and an implementation described above, in another implementation of the second aspect, the receiving, by the terminal device, the configuration mode indication information transmitted by the network device includes: receiving, by the terminal device, system information transmitted by the network device, where the system information includes the configuration mode indication information.

With reference to the second aspect and an implementation described above, in another implementation of the second aspect, the N communication parameters include a duplex mode, and a configuration mode of the optional configuration mode corresponding to the duplex mode is determined by the network device according to the number of duplex modes used in the cell in which the terminal device is located.

With reference to the second aspect and an implementation described above, in another implementation of the second aspect, when the cell uses one duplex mode, the configuration mode corresponding to the duplex mode is the configuration mode configured via the system information; or when the cell uses more duplex modes, the configuration mode corresponding to the duplex mode is one of the following configuration modes included in the optional configuration mode: the configuration mode configured via the RRC signaling, the configuration mode configured via the physical layer signaling, the configuration mode configured via the MAC layer signaling and the configuration mode configured via both the RRC signaling and the physical layer signaling.

With reference to the second aspect and an implementation described above, in another implementation of the second aspect, the duplex modes used in the cell include at least one of the following duplex modes: a FDD, a TDD, and a full duplex.

With reference to the second aspect and an implementation described above, in another implementation of the second aspect, the receiving, by the terminal device, the configuration mode indication information transmitted by the network device includes: receiving, by the terminal device, RRC signaling transmitted by the network device, where the RRC signaling includes the configuration mode indication information; or receiving, by the terminal device, system information transmitted by the network device, where the system information includes the configuration mode indication information.

In a third aspect, a network device is provided for performing the method in the first aspect or any possible implementation of the first aspect described above. Specifically, the network device includes a functional module for performing the method in the first aspect or any possible implementation of the first aspect described above.

In a fourth aspect, a terminal device is provided for performing the method in the second aspect or any possible implementation of the second aspect described above. Specifically, the terminal device includes a functional module for performing the method in the second aspect or any possible implementation of the second aspect.

In a fifth aspect, a network device is provided, including a processor, a memory, and a transceiver. The processor, the memory, and the transceiver communicate with each other via an internal connection path, over which a control and/or data signal is transferred, such that the network device performs the method in the first aspect or any possible implementation of the first aspect described above.

In a sixth aspect, a terminal device is provided, including a processor, a memory, and a transceiver. The processor, the memory, and the transceiver communicate with each other via an internal connection path, over which a control and/or data signal is transferred, such that the terminal device performs the method in the second aspect or any possible implementation of the second aspect described above.

In a seventh aspect, a computer readable medium is provided for storing a computer program including instructions for performing in the first aspect or any possible implementation of the first aspect described above.

In an eighth aspect, a computer readable medium is provided for storing a computer program including instructions for performing in the second aspect or any possible implementation of the second aspect described above.

### BRIEF DESCRIPTION OF DRAWINGS

FIG. 1 is a schematic flowchart of a method for configuring a communication parameter according to an embodiment of the present application;
FIG. 2 is a schematic flowchart of a method for configuring a communication parameter according to another embodiment of the present application;
FIG. 3 is a schematic block diagram of a network device according to an embodiment of the present application;
FIG. 4 is a schematic block diagram of a terminal device according to an embodiment of the present application;
FIG. 5 is a schematic block diagram of a network device according to another embodiment of the present application; and
FIG. 6 is a schematic block diagram of a terminal device according to another embodiment of the present application.

### DESCRIPTION OF EMBODIMENTS

Technical solutions in the embodiments of the present application will be clearly and completely described below with reference to the accompanying drawings in the embodiments of the present application.

It should be understood that the technical solutions in the embodiments of the present application can be applied to various communication systems, for example, a global system of mobile communication (Global System of Mobile communication, "GSM" for short), a code division multiple access (Code Division Multiple Access, "CDMA" for short) system, a wideband code division multiple access (Wideband Code Division Multiple Access, "WCDMA" for short) system, a general packet radio service (General Packet Radio Service, "GPRS" for short), a long term evolution (Long Term Evolution, "LTE" for short) system, an LTE frequency division duplex (Frequency Division Duplex, "FDD" for short) system, an LTE time division duplex (Time Division Duplex, "TDD" for short), a universal mobile telecommunication system (Universal Mobile Telecommunication System, "UMTS" for short) or a worldwide interoperability for microwave access (Worldwide Interoperability for Microwave Access, "WiMAX" for short) communication system, a 5G system, or a new radio (New Radio, NR) system.

In the embodiments of the present application, the terminal device may include, but is not limited to, a mobile station (Mobile Station, MS), a mobile terminal (Mobile Terminal), a mobile telephone (Mobile Telephone), user equipment (User Equipment, UE), a handset, portable equipment, a vehicle, etc. The terminal device may communicate with one or more core networks via a radio access network (Radio Access Network, RAN), for example, the terminal device may be a mobile phone (or known as a "cellular" phone), a computer with wireless communication capabilities, etc., and the terminal device may also be a portable, pocket, handheld, computer-integrated or vehicle-mounted mobile apparatus.

The network device involved in the embodiments of the present application is an apparatus deployed in the radio access network to enable a wireless communication for the terminal device. The network device may be a base station, which may include various forms of macro base stations, micro base stations, relay stations, access points, etc. In systems using different wireless access technologies, devices with base station functionality may vary in names which, for example, in an LTE network, may be referred to as an Evolved NodeB (Evolved NodeB, "eNB" or "eNodeB" for short), and in a 3^{rd} Generation (3rd Generation, "3G" for short) network, may be referred to as a Node B, and so on.

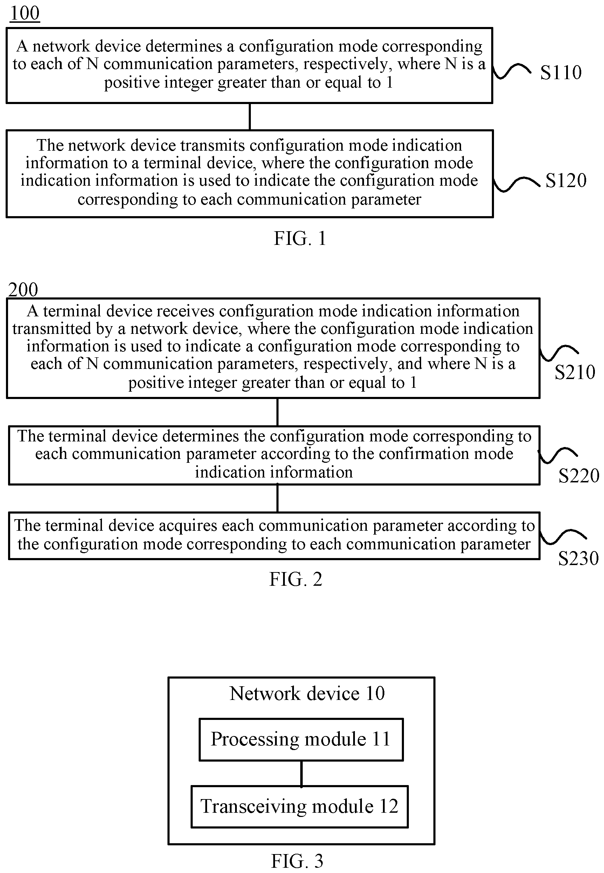

FIG. 1 shows a method for configuring a communication parameter according to an embodiment of the present application. As shown in FIG. 1, the method 100 includes:
S110: a network device determines a configuration mode corresponding to each of N communication parameters, respectively, where N is a positive integer greater than or equal to 1; and
S 120: the network device transmits configuration mode indication information to a terminal device, where the configuration mode indication information is used to indicate the configuration mode corresponding to each communication parameter.

Therefore, according to the method for configuring the communication parameter in the embodiment of the present application, after determining a configuration mode corresponding to the communication parameter, the network device indicates the configuration mode of the communication parameter to the terminal device. Thus, the network device can dynamically determine the configuration mode corresponding to the communication parameter, so that the communication parameter is flexibly configured in order to meet requirements from a future wireless network.

Optionally, as an example, everytime when the network device determines a configuration mode corresponding to one communication parameter, it transmits configuration mode indication information to the terminal device to notify the terminal device of the configuration mode corresponding to that communication parameter. Alternatively, after determining configuration modes corresponding to respective communication parameters, the network device notifies the terminal device of the configuration modes corresponding to such respective communication parameters via a piece of configuration mode indication information.

For example, a specific form of the configuration mode indication information in S120 may be a list specifying each communication parameter and a configuration mode corresponding thereto, and Table 1 shows an alternative format of the list.

**Table 1**

| | |
|---|---|
| Communication parameter 1 | Configuration mode X |
| Communication parameter 2 | Configuration mode Y |
| Communication parameter 3 | Configuration mode Z |
| Communication parameter 4 | Void |

Moreover, optionally, the configuration mode indication information (Table 1) may be configured by the network device for the terminal device by means of a broadcast, or may be configured by the network device for the terminal device by using a dedicated signaling which may be, for example, a RRC signaling. Also, if a configuration mode corresponding to a certain communication parameter is "Void", it indicates that the configuration mode of this communication parameter is not specified by the system at this time, but will be specified by means of signaling later. Thus, the system can be improved in terms of implementation flexibility.

Further, after the network device configures the above table for the terminal device, the network device may thereafter modify the configuration mode(s) of a certain communication parameter or certain communication parameters via dedicated signaling. The dedicated signaling here may be, for example, RRC signaling or downlink control information ("DCI" for short).

In an embodiment of the present application, optionally, when determining a configuration mode corresponding to each communication parameter, the network device may select, from an optional configuration mode, the configuration mode corresponding to each communication parameter according to each communication parameter. The optional configuration mode includes at least one of the following configuration modes: a configuration mode configured via system information, a configuration mode configured via RRC signaling, a configuration mode configured via physical layer signaling, a configuration mode configured via MAC layer signaling, and a configuration mode configured via both the RRC signaling and the physical layer signaling.

The above-described physical layer signaling may be specifically DCI. When the network device configures a communication parameter via the DCI, the communication parameter may be indicated by using an explicit indication or may be indicated by using an implicit indication. For example, description is made by taking an example where the communication parameter is an uplink waveform. DCI format 0 can implicitly indicate that the uplink waveform of the terminal device is single-carrier frequency-division multiple access (Single-carrier Frequency-Division Multiple Access, "SC-FDMA" for short), and DCI format 1 may implicitly indicate that the uplink waveform of the terminal device is orthogonal frequency division multiplexing (Orthogonal Frequency Division Multiplexing, "OFDM" for short).

In an embodiment of the present application, optionally, the N communication parameters include the uplink waveform. Moreover, it can be understood that there are two kinds of waveforms in the uplink in a future communication system (such as 5G): SC-FDMA and OFDM, the selection of the two uplink waveforms is closely related to environments of a channel in which the terminal device is located and the distance from the network device. Have a close relationship. Therefore, when determining a configuration mode corresponding to the uplink waveform, the network device determines the configuration mode of the optional configuration mode corresponding to the uplink waveform according to the environments of the channel in which the terminal device is located and/or a moving speed of the terminal device.

Specifically, in some embodiments, for a terminal device with a stable channel condition and a slow moving speed, the network device may select a slow uplink waveform configuration mode, for example, configure the uplink waveform via RRC signaling, correspondingly, the terminal device only uses the uplink waveform configured via the RRC signaling. Alternatively, for a terminal device with an unstable channel condition or a fast moving speed, the network device needs to dynamically configure the uplink waveform, for example, the network device configures the uplink waveform via physical layer signaling (such as DCI) or MAC layer signaling, correspondingly, the terminal device only uses the uplink waveform configured via the physical layer signaling or the MAC layer signaling. Alternatively, when the channel in which the terminal device is located has an unstable state, but the terminal device has a slow moving speed, the network device uses a configuration mode configured via both the RRC signaling and the physical layer signaling (or the MAC layer signaling), correspondingly, the terminal device will replace a previous configuration with a configuration that is most recently received. For example, when a connection is just established, the uplink waveform configured via the RRC signaling for the terminal device is SC-FDMA; as the channel in which the terminal device is located has an environment change, the uplink waveform configured by the network device using the DCI for the terminal device is OFDM. The terminal device then switches the uplink waveform from SC-FDMA to OFDM.

In an embodiment of the present application, optionally, the N communication parameters include a subcarrier spacing (or a numerology), the network device determines a configuration mode of the optional configuration mode corresponding to the subcarrier spacing according to the number of subcarrier spacings used in a cell in which the terminal device is located.

Specifically, in some embodiments, when it is determined that the cell uses one subcarrier spacing, the network device determines the configuration mode configured via the system information as a target configuration mode corresponding to the subcarrier spacing; or when it is determined that the cell uses more subcarrier spacings, the network device determines one of the following configuration modes included in the optional configuration mode: the configuration mode configured via the RRC signaling, the configuration mode configured via the physical layer signaling and the configuration mode configured via the MAC layer signaling, as the configuration mode corresponding to the subcarrier spacing.

Further, the network device may indicate the configuration mode of the subcarrier spacing to the terminal device via system information (System Information). According to the system information, the terminal device will know how to obtain subcarrier spacings (numerologies) used in the cell.

For example, if the terminal device determines that the network device configures the subcarrier spacing via the system information, the terminal device will only use the subcarrier spacing configured via the system information. Alternatively, if the terminal device determines that the network device configures the subcarrier spacing via the RRC signaling, the terminal device will only use the subcarrier spacing configured via the RRC signaling.

Moreover, it can be understood that when the cell uses more subcarrier spacings, the network device may use a configuration mode configured via both the RRC signaling and the physical layer signaling (or the MAC layer signaling). Correspondingly, the terminal device will replace a previous configuration with a configuration that is most recently received. For example, when a connection is just established, the subcarrier spacing configured via the RRC signaling for the terminal device is 15 kHz. As the channel in which the terminal device is located has an environment change, the subcarrier spacing configured by the network device using the DCI for the terminal device is 20 kHz. The terminal device then determines that the subcarrier spacing of the cell is switched from 15 kHz to 20 kHz.

In an embodiment of the present application, optionally, the N communication parameters include a duplex mode; and the network device determines a configuration mode of the optional configuration mode corresponding to the duplex mode according to the number of duplex modes used in the cell in which the terminal device is located.

Specifically, in some embodiments, when it is determined that the cell uses one duplex mode, the network device determines the configuration mode configured via the system information as the configuration mode corresponding to the duplex mode; or when it is determined that the cell uses more duplex modes, the network device determines one of the following configuration modes included in the optional configuration mode: the configuration mode configured via the RRC signaling, the configuration mode configured via the physical layer signaling, the configuration mode configured via the MAC layer signaling and the configuration mode configured via both the RRC signaling and the physical layer signaling, as the configuration mode corresponding to the duplex mode.

Further, the network device may indicate the configuration mode of the duplex mode to the terminal device via system information and/or RRC signaling. According to the system information and/or the RRC signaling, the terminal device will know how to obtain, duplex modes used in the cell.

Similarly, when the cell uses more duplex modes, the network device may use a configuration mode configured via both RRC signaling and the physical layer signaling (or the MAC layer signaling). Correspondingly, the terminal device will replace a previous configuration with a configuration that is most recently received. For example, when a connection is just established, the duplex mode configured via the RRC signaling for the terminal device is frequency division duplexing (Frequency Division Duplexing, "FDD" for short); as the channel in which the terminal device is located has an environment change, the duplex mode configured by the network device using the DCI for the terminal device is time division duplexing (Time Division Duplexing, "TDD" for short). The terminal device then determines that the duplex mode of the cell is switched from FDD to TDD.

In the foregoing embodiments, optionally, the subcarrier spacings used in the cell include at least one of the following duplex modes: an FDD, a TDD, and a full duplex.

In all the embodiments described above, optionally, the network device and the terminal device may predetermine a corresponding relationship between a specific configuration mode and a configuration mode number. When indicating a configuration mode of a parameter via the configuration mode indication information, the network device may only indicate the configuration mode number, and the terminal device may determine the specific configuration mode via the configuration mode number and the predetermined corresponding relationship.

For example, the corresponding relationship between the specific configuration mode and the configuration mode number can be shown in Table 2. It can be understood that Table 2 is only one type of corresponding relationship between the specific configuration mode and the configuration mode number, but not intended to limit the corresponding relationship.

**Table 2**

| Specific configuration mode | Configuration mode number |
|---|---|
| Configured via system information | 1 |
| Configured via RRC signaling | 2 |
| Configured via MAC layer signaling | 3 |
| Configured via both the RRC signaling and the physical layer signaling | 4 |

It should be noted that the foregoing embodiments are described by way of an example where the communication parameters include the uplink waveform, the subcarrier spacing, and the duplex mode. However, the embodiments of the present application are not limited to the communication parameters described above. Other communication parameters may also be configured with a method for configuring a communication parameter according to an embodiment of the present application.

The method for configuring the communication parameter according to the embodiment of the present application has been described above in detail from a network device side in conjunction with FIG. 1, and a method for configuring a communication parameter according to an embodiment of the present application will be described below in detail from a terminal device side in conjunction with FIG. 2. It should be understood that the description about the interaction between the terminal device and the network device on the terminal device side is the same as that on the network device side. To avoid redundancy, the related description is omitted as appropriate.

FIG. 2 is a method for configuring a communication parameter according to another embodiment of the present application. As shown in FIG. 2, the method 200 includes:
S210: a terminal device receives configuration mode indication information transmitted by a network device, where the configuration mode indication information is used to indicate a configuration mode corresponding to each of N communication parameters, respectively, and where N is a positive integer greater than or equal to 1;
S220: the terminal device determines the configuration mode corresponding to each communication parameter according to the confirmation mode indication information; and
S230: the terminal device acquires each communication parameter according to the configuration mode corresponding to each communication parameter.

Therefore, according to the method for configuring the communication parameter in the present application, the terminal device receives indication information transmitted by the network device indicative of the configuration mode of the communication parameter, and acquires the communication parameter according to the received indication information. Thus, the network device is allowed to dynamically determine the configuration mode corresponding to the communication parameter, so that the communication parameter is flexibly configured in order to meet requirements from a future wireless network.

In an embodiment of the present application, optionally, the configuration mode corresponding to each communication parameter is determined by the network device according to each communication parameter and an optional configuration mode, where the optional configuration mode includes at least one of the following configuration modes: a configuration mode configured via system information, a configuration mode configured via RRC signaling, a configuration mode configured via physical layer signaling, a configuration mode configured via MAC layer signaling, and a configuration mode configured via both the RRC signaling and the physical layer signaling.

In an embodiment of the present application, optionally, the N communication parameters include an uplink waveform mode.

In an embodiment of the present application, optionally, a configuration mode of the optional configuration mode corresponding to the uplink waveform mode is determined by the network device according to environments of a channel in which the terminal device is located and/or a moving speed of the terminal device.

In an embodiment of the present application, optionally, S210 specifically includes: receiving, by the terminal device, RRC signaling transmitted by the network device, where the RRC signaling includes the configuration mode indication information.

In an embodiment of the present application, optionally, the N communication parameters include a subcarrier spacing, and a configuration mode of the optional configuration mode corresponding to the subcarrier spacing is determined by the network device according to the number of subcarrier spacings used in a cell in which the terminal device is located.

In an embodiment of the present application, optionally, when the cell uses one subcarrier spacing, the configuration mode corresponding to the subcarrier spacing is the configuration mode configured via the system information; or when the cell uses more subcarrier spacings, the configuration mode corresponding to the subcarrier spacing is one of the following configuration modes included in the optional configuration: the configuration mode configured via the RRC signaling, the configuration mode configured via the physical layer signaling and the configuration mode configured via the MAC layer signaling.

In an embodiment of the present application, optionally, S210 specifically includes: receiving, by the terminal device, system information transmitted by the network device, where the system information includes the configuration mode indication information.

In an embodiment of the present application, optionally, the N communication parameters include a duplex mode, and a configuration mode of the optional configuration mode corresponding to the duplex mode is determined by the network device according to the number of duplex modes used in the cell in which the terminal device is located.

In an embodiment of the present application, optionally, when the cell uses one duplex mode, the configuration mode corresponding to the duplex mode is the configuration mode configured via the system information; or when the cell uses more duplex modes, the configuration mode corresponding to the duplex mode is one of the following configuration modes included in the optional configuration mode: the configuration mode configured via the RRC signaling, the configuration mode configured via the physical layer signaling, the configuration mode configured via the MAC layer signaling and the configuration mode configured via both the RRC signaling and the physical layer signaling.

In an embodiment of the present application, optionally, the duplex modes used in the cell include at least one of the following duplex modes: a frequency division duplex FDD, a time division duplex TDD, and a full duplex.

In an embodiment of the present application, optionally, S210 specifically includes: receiving, by the terminal device, RRC signaling transmitted by the network device, where the RRC signaling includes the configuration mode indication information; or receiving, by the terminal device, system information transmitted by the network device, where the system information includes the configuration mode indication information.

The method for configuring the communication parameter according to the embodiment of the present application has been described above in detail in conjunction with FIG. 1 and FIG. 2, and a network device according to an embodiment of the present application will be described below in detail in conjunction with FIG. 3. As shown in FIG. 3 , the network device 10 includes :
a processing module 11 configured to determine a configuration mode corresponding to each of N communication parameters, respectively, where N is a positive integer greater than or equal to 1; and
a transceiving module 12 configured to transmit configuration mode indication information to a terminal device, where the configuration mode indication information is used to indicate the configuration mode corresponding to each communication parameter.

Therefore, after determining a configuration mode corresponding to the communication parameter, the network device in the present application indicates the configuration mode of the communication parameter to the terminal device. Thus, the network device can dynamically determine the configuration mode corresponding to the communication parameter, so that the communication parameter is flexibly configured in order to meet requirements from a future wireless network.

In an embodiment of the present application, optionally, the processing module 11 is specifically configured to: determine the configuration mode corresponding to each communication parameter according to each communication parameter and an optional configuration mode, where the optional configuration mode includes at least one of the following configuration modes: a configuration mode configured via system information, a configuration mode configured via RRC signaling, a configuration mode configured via physical layer signaling, a configuration mode configured via MAC layer signaling, and a configuration mode configured via both the RRC signaling and the physical layer signaling.

In an embodiment of the present application, optionally, the N communication parameters include an uplink waveform mode.

In an embodiment of the present application, optionally, the processing module 11 is specifically configured to: determine a configuration mode of the optional configuration mode corresponding to the uplink waveform mode according to environments of a channel in which the terminal device is located and/or a moving speed of the terminal device.

In an embodiment of the present application, optionally, the transceiving module 12 is specifically configured to: transmit RRC signaling to the terminal device, where the RRC signaling includes the configuration mode indication information

In an embodiment of the present application, optionally, the N communication parameters include a subcarrier spacing; and
the processing module 11 is specifically configured to: determine a configuration mode of the optional configuration mode corresponding to the subcarrier spacing according to the number of subcarrier spacings used in a cell in which the terminal device is located.

In an embodiment of the present application, optionally, the processing module 11 is specifically configured to: when it is determined that the cell uses one subcarrier spacing, determine the configuration mode configured via the system information as the configuration mode corresponding to the subcarrier spacing; or when it is determined that the cell uses more subcarrier spacings, determine one of the following configuration modes included in the optional configuration mode: the configuration mode configured via the RRC signaling, the configuration mode configured via the physical layer signaling and the configuration mode configured via the MAC layer signaling, as the configuration mode corresponding to the subcarrier spacing.

In an embodiment of the present application, optionally, the transceiving module 12 is specifically configured to: transmit system information to the terminal device, where the system information includes the configuration mode indication information.

In an embodiment of the present application, optionally, the N communication parameters include a duplex mode; and
where the processing module 11 is specifically configured to: determine a configuration mode of the optional configuration mode corresponding to the duplex mode according to the number of duplex modes used in the cell in which the terminal device is located.

In an embodiment of the present application, optionally, the processing module 11 is specifically configured to: when it is determined that the cell uses one duplex mode, determine the configuration mode configured via the system information as the configuration mode corresponding to the duplex mode; or when it is determined that the cell uses more duplex modes, determine one of the following configuration modes included in the optional configuration mode: the configuration mode configured via the RRC signaling, the configuration mode configured via the physical layer signaling, the configuration mode configured via the MAC layer signaling and the configuration mode configured via both the RRC signaling and the physical layer signaling, as the configuration mode corresponding to the duplex mode.

In an embodiment of the present application, optionally, the duplex modes used in the cell include at least one of the following duplex modes: a frequency division duplex FDD, a time division duplex TDD, and a full duplex.

In an embodiment of the present application, optionally, the transceiving module 12 is specifically configured to: transmit RRC signaling to the terminal device, where the RRC signaling includes the configuration mode indication information; or transmit system information to the terminal device, where the system information includes the configuration mode indication information.

For the network device according to the embodiment of the present application, reference may be made to processes corresponding to the method 100 according to the embodiment of the present application, moreover, units/modules in the network device and the foregoing other operations and/or functions are intend to implement the corresponding processes in the method 100 respectively. For the sake of brevity, details will not be described herein again.

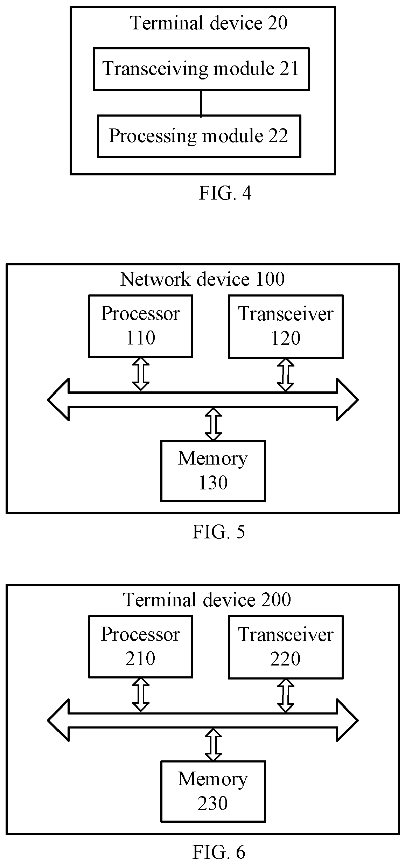

FIG. 4 shows a terminal device according to an embodiment of the present application. As shown in FIG. 4, the terminal device 20 includes:
a transceiving module 21 configured to receive configuration mode indication information transmitted by a network device, where the configuration mode indication information is used to indicate a configuration mode corresponding to each of N communication parameters, respectively, and where N is a positive integer greater than or equal to 1; and
a processing module 22 configured to determine the configuration mode corresponding to each communication parameter according to the confirmation mode indication information;
where the processing module 22 is further configured to acquire each communication parameter according to the configuration mode corresponding to each communication parameter.

Therefore, the terminal device according to the present application receives indication information transmitted by the network device indicative of the configuration mode of the communication parameter, and acquires the communication parameter according to the received indication information. Thus, the network device is allowed to dynamically determine the configuration mode corresponding to the communication parameter, so that the communication parameter is flexibly configured in order to meet requirements from a future wireless network.

In an embodiment of the present application, optionally, the configuration mode corresponding to each communication parameter is determined by the network device according to each communication parameter and an optional configuration mode, where the optional configuration mode include at least one of the following configuration modes: a configuration mode configured via system information, a configuration mode configured via RRC signaling, a configuration mode configured via physical layer signaling, a configuration mode configured via MAC layer signaling, and a configuration mode configured via both the RRC signaling and the physical layer signaling.

In an embodiment of the present application, optionally, the N communication parameters include an uplink waveform mode.

In an embodiment of the present application, optionally, a configuration mode of the optional configuration mode corresponding to the uplink waveform mode is determined by the network device according to environments of a channel in which the terminal device is located and/or a moving speed of the terminal device.

In an embodiment of the present application, optionally, the transceiving module 21 is specifically configured to: receive RRC signaling transmitted by the network device, where the RRC signaling includes the configuration mode indication information.

In an embodiment of the present application, optionally, the N communication parameters include a subcarrier spacing, and a configuration mode of the optional configuration mode corresponding to the subcarrier spacing is determined by the network device according to the number of subcarrier spacings used in a cell in which the terminal device is located.

In an embodiment of the present application, optionally, when the cell uses one subcarrier spacing, the configuration mode corresponding to the subcarrier spacing is the configuration mode configured via the system information; or when the cell uses more subcarrier spacings, the configuration mode corresponding to the subcarrier spacing is one of the following configuration modes included in the optional configuration: the configuration mode configured via the RRC signaling, the configuration mode configured via the physical layer signaling and the configuration mode configured via the MAC layer signaling.

In an embodiment of the present application, optionally, the transceiving module 21 is specifically configured to: receive system information transmitted by the network device, where the system information includes the configuration mode indication information.

In an embodiment of the present application, optionally, the N communication parameters include a duplex mode, and a configuration mode of the optional configuration mode corresponding to the duplex mode is determined by the network device according to the number of duplex modes used in the cell in which the terminal device is located.

In an embodiment of the present application, optionally, when the cell uses one duplex mode, the configuration mode corresponding to the duplex mode is the configuration mode configured via the system information; or when the cell uses more duplex modes, the configuration mode corresponding to the duplex mode is one of the following configuration modes included in the optional configuration mode: the configuration mode configured via the RRC signaling, the configuration mode configured via the physical layer signaling, the configuration mode configured via the MAC layer signaling and the configuration mode configured via both the RRC signaling and the physical layer signaling.

In an embodiment of the present application, optionally, the duplex modes used in the cell include at least one of the following duplex modes: a frequency division duplex FDD, a time division duplex TDD, and a full duplex.

In an embodiment of the present application, optionally, the transceiving module 21 is specifically configured to: receive RRC signaling transmitted by the network device, where the RRC signaling includes the configuration mode indication information; or receive system information transmitted by the network device, where the system information includes the configuration mode indication information.

For the terminal device according to the embodiment of the present application, reference may be made to processes corresponding to the method 200 according to the embodiment of the present application, moreover, units/modules in the terminal device and the foregoing other operations and/or functions are intend to implement the corresponding processes in the method 200 respectively. For the sake of brevity, details will not be described herein again.

FIG. 5 shows a network device according to another embodiment of the present application. As shown in FIG. 5, the network device 100 includes a processor 110 and a transceiver 120 coupled to each other. Optionally, the network device 100 further includes a memory 130 coupled to the processor 110. The processor 110, the memory 130, and the transceiver 120 can communicate with each other via an internal connection path. The processor 110 is configured to determine a configuration mode corresponding to each of N communication parameters, respectively, where N is a positive integer greater than or equal to 1; the transceiver 120 is configured to transmit configuration mode indication information to a terminal device, where the configuration mode indication information is used to indicate the configuration mode corresponding to each communication parameter.

Therefore, after determining a configuration mode corresponding to the communication parameter, the network device according to the present application indicates the configuration mode of the communication parameter to the terminal device. Thus, the network device can dynamically determine the configuration mode corresponding to the communication parameter, so that the communication parameter is flexibly configured in order to meet requirements from a future wireless network.

For the network device 1000 according to the embodiment of the present application, reference may be made to the corresponding network device 10 according to the embodiment of the present application, moreover, units/modules in the network device and the foregoing other operations and/or functions are intend to implement the corresponding processes in the method 100 respectively. For the sake of brevity, details will not be described herein again.

FIG. 6 shows a terminal device according to another embodiment of the present application. As shown in FIG. 6, the terminal device 200 includes a processor 210 and a transceiver 220 coupled to each other. Optionally, the terminal device 200 further includes a memory 230 coupled to the processor 210. The processor 210, the memory 230, and the transceiver 220 can communicate with each other via an internal connection path. The transceiver 220 is configured to receive configuration mode indication information transmitted by a network device, where the configuration mode indication information is used to indicate a configuration mode corresponding to each of N communication parameters, respectively, and where N is a positive integer greater than or equal to 1; and the processor 210 is configured to determine the configuration mode corresponding to each communication parameter according to the confirmation mode indication information, and acquire each communication parameter according to the configuration mode corresponding to each communication parameter.

Therefore, the terminal device according to the present application receives indication information transmitted by the network device indicative of the configuration mode of the communication parameter, and acquires the communication parameter according to the received indication information. Thus, the network device is allowed to dynamically determine the configuration mode corresponding to the communication parameter, so that the communication parameter is flexibly configured in order to meet requirements from a future wireless network.

For the terminal device 200 according to the embodiment of the present application, reference may be made to the corresponding terminal device 20 according to the embodiment of the present application, moreover, units/modules in the terminal device and the foregoing other operations and/or functions are intend to implement the corresponding processes in the method 200 respectively. For the sake of brevity, details will not be described herein again.

It can be understood that the processor in the embodiments of the present application may be an integrated circuit chip with signal processing capabilities. The above processor may be a general-purpose processor, a digital signal processor (DSP), an application specific integrated circuit (ASIC), a field programmable gate array (FPGA) or other programmable logic devices, discrete gate or transistor logic devices, discrete hardware components. The methods, steps, and logical block diagrams disclosed in the embodiments of the present application may be implemented or performed. The general purpose processor may be a microprocessor or the processor may also be any conventional processor or the like.

The memory in the embodiments of the present application may be a volatile memory or a non-volatile memory, or may include both the volatile memory and the non-volatile memory. The non-volatile memory may be a read-only memory (ROM), a programmable read only memory (PROM), or an erasable programmable read only memory (EPROM), an electrically erasable programmable read only memory (EEPROM) or a flash memory. The volatile memory may be a random access memory (RAM), which is used as an external cache. By way of exemplary but not restrictive illustration, many forms of RAMs may be available, such as a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM) and a direct Rambus random access memory (DR RAM). It should be noted that the memories of the systems and methods described herein are intended to include, but are not limited to these and any other suitable types of memories.

It may be known to persons of ordinary skill in the art that, the units and the algorithm steps of each example that are described with reference to the embodiments disclosed herein can be implemented by electronic hardware or a combination of electronic hardware and computer software. The situation whether these functions are performed by hardware or software depends on specific applications and design constraints of the technical solutions. Persons skilled in the art may implement the described functions by using different methods for each specific application, and such implementation should not be regarded as going beyond the scope of the present application.

It may be clearly understood by persons skilled in the art that, for the purpose of convenient and brief description, reference may be made to the corresponding process in the foregoing method embodiments for detailed working processes of the foregoing systems, apparatuses, and units, and details will not be described herein again.

In several embodiments provided in the present application, it should be understood that the disclosed systems, apparatuses, and methods may be implemented in other manners. For example, the described apparatus embodiments are merely exemplary. For instance, the division of the units is merely a division of logical functions and there may be other divisions during actual implementations. For instance, multiple units or components may be combined or integrated into another system, or some features may be omitted or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on multiple network units. A part or all of the units may be selected according to actual needs to achieve the objectives of the scheme in the embodiments.

In addition, functional units in the embodiments of the present application may be integrated into one processing unit, or each of the units may exist alone physically, or two or more units are integrated into one unit.

If implemented in a form of a software functional unit and sold or used as an independent product, the functions may be stored in a computer-readable storage medium. Based on such an understanding, the technical solution of the present application essentially, or the part contributing to the prior art, or a part of the technical solution may be embodied in a form of a software product. The computer software product is stored in a storage medium, and includes several instructions for enabling a computer device (which may be a personal computer, a server, or a network device, etc.) to perform all or a part of the steps of the methods described in the embodiments of the present application. The foregoing storage medium includes: any medium that can store program codes, such as a USB flash disk, a mobile hard disk, a read-only memory (ROM), a random access memory (RAM), a magnetic disk, or an optical disc, etc.

The above descriptions are merely specific embodiments of the present application; however, the protection scope of the present application is not limited thereto. Any modification or replacement that may be readily envisaged of by persons skilled in the art within the technical scope disclosed in the present application should fall into the protection scope of the present application. Thus, the protection scope of the present application shall be subject to the claims.

## Claims

1. A method (100) for configuring a communication parameter, comprising:
determining (S110), by a network device, a configuration mode corresponding to each of N communication parameters, respectively, wherein the N communication parameters comprise an uplink waveform, and N is a positive integer greater than or equal to 1; and
transmitting (S120), by the network device, configuration mode indication information to a terminal device, wherein the configuration mode indication information is used to indicate the configuration mode corresponding to each communication parameter;
wherein the determining (S110), by the network device, the configuration mode corresponding to each of N communication parameters comprises:
determining, by the network device, the configuration mode corresponding to each communication parameter according to each communication parameter and an optional configuration mode, wherein the optional configuration mode comprises at least one of the following configuration modes: a configuration mode configured via system information, a configuration mode configured via radio resource control, RRC, signaling.

2. The method (100) according to claim 1, wherein the transmitting (S120), by the network device, the configuration mode indication information to the terminal device comprises:
transmitting, by the network device, RRC signaling to the terminal device, wherein the RRC signaling comprises the configuration mode indication information; or
transmitting, by the network device, physical layer signaling to the terminal device, wherein the physical layer signaling comprises the configuration mode indication information.

3. The method (100) according to claim 1 or 2, further comprising:
transmitting, by the network device, first signaling, wherein the first signaling is used to modify the configuration mode of the uplink waveform.

4. The method (100) according to claim 3, wherein the first signaling comprises RRC signaling or downlink control information, DCI.

5. A network device (10), comprising:
a processing module (11) configured to determine a configuration mode corresponding to each of N communication parameters, respectively, wherein the N communication parameters comprise an uplink waveform, and N is a positive integer greater than or equal to 1; and
a transceiving module (12) configured to transmit configuration mode indication information to a terminal device, wherein the configuration mode indication information is used to indicate the configuration mode corresponding to each communication parameter;
wherein the processing module (11) is configured to:
determine the configuration mode corresponding to each communication parameter according to each communication parameter and an optional configuration mode, wherein the optional configuration mode comprises at least one of the following configuration modes: a configuration mode configured via system information, a configuration mode configured via radio resource control, RRC, signaling.

6. The network device (10) according to claim 5, wherein the transceiving module (12) is configured to:
transmit RRC signaling to the terminal device, wherein the RRC signaling comprises the configuration mode indication information; or
transmit physical layer signaling to the terminal device, wherein the physical layer signaling comprises the configuration mode indication information.

7. The network device (10) according to claim 5 or 6, wherein the transceiving module (12) is further configured to:
transmit first signaling, wherein the first signaling is used to modify the configuration mode of the uplink waveform.

8. The network device (10) according to claim 7, wherein the first signaling comprises RRC signaling or downlink control information, DCI.

9. A method (200) for configuring a communication parameter, comprising:
receiving (S210), by a terminal device, configuration mode indication information transmitted by a network device, wherein the configuration mode indication information is used to indicate a configuration mode corresponding to each of N communication parameters, respectively, and wherein the N communication parameters comprise an uplink waveform and N is a positive integer greater than or equal to 1;
determining (S220), by the terminal device, the configuration mode corresponding to each communication parameter according to the confirmation mode indication information; and
acquiring (S230), by the terminal device, each communication parameter according to the configuration mode corresponding to each communication parameter;
wherein the configuration mode corresponding to each communication parameter is determined by the network device according to each communication parameter and an optional configuration mode, wherein the optional configuration mode comprises at least one of the following configuration modes: a configuration mode configured via system information, a configuration mode configured via radio resource control, RRC, signaling.

10. The method (200) according to claim 9, wherein the receiving (S210), by the terminal device, the configuration mode indication information transmitted by the network device comprises:
receiving, by the terminal device, RRC signaling transmitted by the network device, wherein the RRC signaling comprises the configuration mode indication information; or
receiving, by the terminal device, physical layer signaling transmitted by the network device, wherein the physical layer signaling comprises the configuration mode indication information.

11. The method (200) according to claim 9 or 10, further comprising:
receiving, by the network device, first signaling, wherein the first signaling is used to modify the configuration mode of the uplink waveform.

12. The method (200) according to claim 11, wherein the first signaling comprises RRC signaling or downlink control information, DCI.

13. A terminal device (20), comprising:
a transceiving module (21) configured to receive configuration mode indication information transmitted by a network device, wherein the configuration mode indication information is used to indicate a configuration mode corresponding to each of N communication parameters, respectively, and wherein the N communication parameters comprise an uplink waveform and N is a positive integer greater than or equal to 1; and
a processing module (22) configured to determine the configuration mode corresponding to each communication parameter according to the confirmation mode indication information;
wherein the processing module (22) is further configured to acquire each communication parameter according to the configuration mode corresponding to each communication parameter;
wherein the configuration mode corresponding to each communication parameter is determined by the network device according to each communication parameter and an optional configuration mode, wherein the optional configuration mode comprise at least one of the following configuration modes: a configuration mode configured via system information, a configuration mode configured via radio resource control, RRC, signaling.

14. The terminal device (20) according to claim 13, wherein the transceiving module (21) is specifically configured to:
receive RRC signaling transmitted by the network device, wherein the RRC signaling comprises the configuration mode indication information; or
receive physical layer signaling transmitted by the network device, wherein the physical layer signaling comprises the configuration mode indication information.

15. The terminal device (20) according to claim 13 or 14, wherein the transceiving module (21) is further configured to:
receive first signaling, wherein the first signaling is used to modify the configuration mode of the uplink waveform and the first signaling comprises RRC signaling or downlink control information, DCI.
